# EUROPÄISCHE PATENTSCHRIFT

(11) **EP 0 612 697 B1**
(45) Veröffentlichungstag und Bekanntmachung des Hinweises auf die Patenterteilung: **21.01.1998**
(21) Anmeldenummer: 93810129.2
(22) Anmeldetag: 24.02.1993
(51) Int. Cl.: C02F 11/08, F02C 3/30

(54) **Reinigung von salzbeladenem Abwasser durch Nassoxidation bei superkritischen Bedingungen**
Purification of salt containing waste water by wet oxidation at supercritical conditions
Purification d'eau usée contenant des sels par l'oxidation humide sous conditions supercritiques

(43) Veröffentlichungstag der Anmeldung: 31.08.1994
(73) Patentinhaber: Sulzer Chemtech AG, CH-8404 Winterthur (CH)
(72) Erfinder: La Roche, H. Lucas, CH-8053 Zürich (CH); Weber, Markus, CH-8006 Zürich (CH); Zehnder, Beat, Dr., CH-8600 Dübendorf (CH)
(74) Vertreter: Heubeck, Bernhard

(56) Entgegenhaltungen:
- EP-A- 0 506 069
- WO-A-92/21621
- US-A- 4 822 497
- BER. BUNSENGES. PHYS. CHEM. Bd. 92, 1988, WEINHEIM DE Seiten 631 - 636 W. SCHILLING ET AL. 'COMBUSTION AND DIFFUSION FLAMES AT HIGH PRESSURES TO 2000 BAR' *

## Beschreibung

Die Erfindung betrifft ein Verfahren zur Reinigung von salzbeladenem Abwasser durch Nassoxidation von organischen Inhaltsstoffen bei superkritischen Bedingungen gemäss Oberbegriff von Anspruch 1 sowie einen Reaktor zum Durchführen des Verfahrens.

Aus der US-PS 4 822 497 ist ein derartiges Verfahren, ein sogenanntes SCWO-Verfahren, bekannt (SCWO = SuperCritical Water Oxidation). Die Reaktion findet in einem vertikal aufgestellten, zylindrischen Druckbehälter statt. Eine semikritische oder superkritische Mischung aus Abwasser, Brennstoff und Sauerstoff wird durch eine axial von oben in den Reaktor hineinragende Düse zugeführt. Nach erfolgter Reaktion wird das heisse Fluid mit den Reaktionsprodukten nach oben abgezogen. Bei der Reaktion fällt Salz schlagartig in Form kleiner Kristalle aus (Grösse im Mikrometerbereich) und setzt sich teilweise unten im Reaktor in einer subkritischen Region ab, wo es mittels kalten Wassers als Sole oder Feststoff-Sole-Gemisch abgeführt wird.

Bei einer Weiterentwicklung dieses SCWO-Verfahrens (der Firma ABB-LummusCrest) (vgl. WO-A-92 21621) wird mit einem Rieselfilm von Kühlwasser im unteren Reaktorabschnitt dafür gesorgt, dass das Salz nicht an der Reaktorwand anbackt. Allerdings kann sich im oberen Abschnitt Salz an der Reaktorwand anlagern und so mit der Zeit zu Verstopfungen führen.

Das SCWO-Verfahren findet eine Verwendung bei der Entsorgung von biologisch schwer- oder nichtabbaubaren Prozesswässern (z.B. bei der Papierproduktion). Besonders geeignet ist das Verfahren bei der Vernichtung von gefährlichen Stoffen wie Dioxinen, Furanen, polychlorierten Biphenylen (PCB), Kampfstoffen u.a.

Bei den SCWO-Verfahren sieht man sich mit zwei Hauptproblemen konfrontiert: Einerseits fällt die Löslichkeit von Salzen im Gebiet um den kritischen Punkt von Wasser stark ab, was Ablagerung von Salzen und schliesslich Verstopfungen zur Folge hat. Andererseits ergeben sich durch die Anwesenheit von Salz bei erhöhten Temperatur sehr korrosive Bedingungen. Es ist daher Aufgabe der Erfindung, ein SCWO-Verfahren und einen Reaktor zur Durchführung des Verfahrens zu schaffen, bei dem Verstopfungen durch ausgefällte Salze weitgehend unterbleiben und bei dem das Problem der Korrosion entschärft ist. Diese Aufgabe wird erfindungsgemäss durch die im kennzeichnenden Teil des Anspruchs 1 genannten Merkmale gelöst.

Durch den subkritischen Mantelstrom gemäss der Erfindung wird folgendes erreicht: Einerseits Niedrighalten der Reaktorwandtemperatur, indem die radial aus der Reaktionszone austretende Wärme durch den Mantelstrom abgeführt wird. Andererseits Verhindern eines Salzausfalls, da der Mantelstrom aufgrund seiner Subkritikalität das radial aus der Reaktionszone austretende, feste Salz löst und mit sich fortträgt.

Zusätzlich zu den oxidierbaren Inhaltsstoffen des Abwassers muss im allgemeinen ein Brennstoff zugemischt werden, damit die für die superkritischen Bedingungen benötigte Temperatur erreichbar ist oder stabil erhalten werden kann. Da bei superkritischen Bedingungen gasförmige Kohlenwasserstoffe in Wasser löslich sind, kann beispielsweise Methan als Brennstoff verwendet werden. Es können selbstverständlich auch Brennstoffe verwendet werden, die auch bei subkritischen Bedingungen in Wasser löslich sind, wie beispielsweise Methanol oder Isopropanol.

Das für die Reaktion benötigte sauerstoffhaltige Fluid kann aus verdichtetem Sauerstoff oder verdichteter Luft bestehen; es kann aber auch eine superkritische Mischung von Sauerstoff und Wasser sein. Erfindungsgemäss wird die Reaktion in Form einer Flamme, einer sogenannten "nassen Hochdruckflamme", durchgeführt (vgl. W.Schilling, E.U.Franck, "Combustion and Diffusion Flames at High Pressures", Ber.Bunsenges.Phys.Chem. 92, 631-636 (1988)). Die Oxidation ist verbrennungsähnlich: die freigesetzte Reaktionswärme hat hohe Temperaturen (1400 - 3000 K) und damit eine massive Beschleunigung der Reaktion zur Folge. Dank den hohen Temperaturen genügt für die abzubauenden Inhaltsstoffe eine sehr kurze Verweilzeit im Reaktionsbereich, welche gegenüber den bekannten Verfahren (Reaktion bei 800 - 900 K) um rund drei Grössenordnungen kleiner ist.

Die nasse Hochdruckflamme befindet sich in einem Kernstrahl, der aus den durch eine Brennerdüse in den Reaktor einströmenden Fluiden besteht. Zwischen dem superkritischen Kernstrahl und dem subkritischen Mantelstrom, der durch Kühlwasser erzeugt wird, findet ein Stoffaustausch sowie eine Wärmeübertragung statt. Dank der kurzen Verweilzeit, die für die Zerstörung der schädlichen Stoffen nötig ist, beeinträchtigen die Transportprozesse zwischen Kernstrahl und Mantelstrom den Abbau nur wenig.

Die nasse Hochdruckflamme kann eine Diffusionsflamme sein, bei der das sauerstoffhaltige Fluid und das Abwasser/Brennstoff-Fluid getrennt in den Reaktionsbereich eingespeist werden. Sie kann aber auch eine Vormischflamme sein, bei der die Reaktionspartner vor Austritt aus der Brennerdüse vermischt werden. Bei einer Vormischflamme wird mit Vorteil eine Pilotflamme verwendet, bei der beispielsweise Wasserstoff als zusätzlicher Brennstoff eingesetzt wird. Die Pilotflamme ist einerseits für die Zündung und andererseits als Flammhalter vorgesehen.

Die abhängigen Ansprüche 2 bis 6 betreffen bevorzugte Massnahmen zum Durchführen des erfindungsgemässen Verfahrens, während die Ansprüche 7 bis 11 sich auf vorteilhafte Ausführungsformen des erfindungsgemässen Reaktors beziehen.

Nachfolgend wird die Erfindung anhand von Zeichnungen näher erläutert. Es zeigen:
- Fig. 1: ein Anlageschema mit einem erfindungsgemässen Reaktor,
- Fig. 2: eine Brennerdüse mit Diffusionsflamme,
- Fig. 3: eine Düse eines Kreuzstrahlbrenners,
- Fig. 4: eine Zustandsfläche von reinem Wasser,
- Fig. 5: eine längsgeschnittene zweite Ausführungform des erfindungsgemässen Reaktors und
- Fig. 6: einen Brenner für eine Vormischflamme.

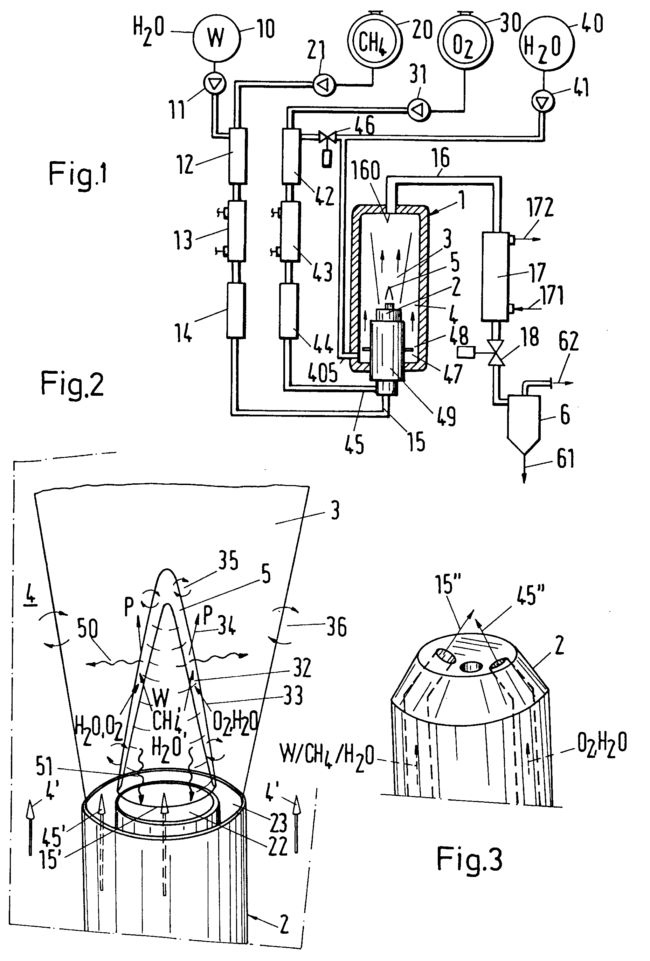

In der Fig.1 ist eine Anlage dargestellt, mit der das erfindungsgemässe SCWO-Verfahren durchführbar ist. Im Reaktor 1 mit der Brennerdüse 2 erfolgt die Nassoxidation in einem superkritischen Kernstrahl 3, der von einem subkritischen Mantelstrom 4 umhüllt ist. Das Abwasser mit den Inhaltsstoffen W (= organische Inhaltsstoffe und Salze) wird aus dem Reservoir 10 mit einer Hochdruckpumpe 11 in eine Mischereinrichtung 12 gefördert, wo eine Vermischung mit einem Brennstoff (beispielsweise Methan CH₄) aus einem Reservoir 20 (Pumpe oder Kompressor 21) erfolgt. Das Gemisch durchströmt sodann eine Heizung 13 und einen nachgeschalteten Mischer 14, aus dem es als einphasiges Fluid über die Eintrittsstelle 15 in die Brennerdüse 2 eintritt. Parallel dazu wird aus Sauerstoff eines Reservoirs 30 (Pumpe oder Kompressor 31) und Kühlwasser eines Reservoirs 40 (Pumpe 41) mittels eines ersten Mischers 42, einer Heizung 43 und eines zweiten Mischers 44 ein sauerstoffhaltiges Fluid erzeugt, das über die Eintrittsstelle 45 in die Brennerdüse 2 eingespeist wird. In der nassen Hochdruckflamme 5 erfolgt die Reaktion.

Vor einem Dosierorgan 46 am Eingang des Mischers 42 weist die Kühlwasserleitung eine Abzweigung zum Zulauf 405 für den Mantelstrom 4 auf. Über einen Verteilkanal 47 und eine Eintrittsstelle 48 in Form eines Ringspalts wird das Kühlwasser in den Innenraum des Reaktors 2 zugeführt, wo es den Mantelstrom 4 bildet. Die Brennerdüse 2 kann durch eine Wärmedämmung 49 vom Mantelstrom 4 abgeschirmt sein. Im oberen Bereich des Reaktors erfolgt eine Vermischung des Mantelstroms 4 mit dem Kernstrahl 3. Durch eine gemeinsame Austrittsstelle und eine Leitung 16 gelangt der die Reaktionsprodukte führende Ablaufstrom in eine Kühleinrichtung 17 (Kühlwasser 171, 172). Nach einem Drosselorgan 18 wird der Ablaufstrom in einem Abscheider 6 in einen kondensierten Teil 61 und einen gasförmigen Teil 62 separiert. Anstelle des Drosselorgans 18 können auch Entspannungsvorrichtungen dem Abscheider 6 nachgeschaltet werden.

Der Mantelstrom 4 kann durch eingebaute Schikanen (nicht gezeigt) oder durch nichtaxiale Einspritzung mit einer tangentialen Geschwindigkeitskomponente versehen werden, sodass durch den rotierenden Mantelstrom 4 auf der Höhe der Reaktionszone eine stabile Schichtung entsteht. Dadurch wird der Wärme- und Stofftransport zwischen Kern- und Mantelstrom herabgesetzt.

Die Mischvorrichtungen 12, 14, 42 und 44 werden vorzugsweise als statische Mischer ausgebildet. Die Heizungen 13 und 43 sind in der Anlage der Fig.1 als elektrische Widerstandsheizungen vorgesehen. Sie können aber auch stattdessen zwecks Energieeinsparung auf bekannte Weise mit dem Kühler 17 derart gekoppelt werden, dass Wärme rückgewinnbar wird (siehe z.B. K.C.Swallow et al, "The MODAR Process ...", Waste Management 9 19-26 (1989)).

Beim Herstellen eines einphasigen superkritischen Abwasser/Brennstoff-Fluids kann eine Salzausscheidung (in Form von Kristallen oder Soletröpfchen) stattfinden, die zu Ablagerungen in der Heizung 13, im Mischer 14 und/oder in der Brennerdüse 2 führt. Zur Abhilfe kann man beispielsweise einen wasserlöslichen Brennstoff anstelle des gasförmigen Brennstoffs verwenden, um so ein einphasiges subkritisches Gemisch zu erzeugen. Oder man kann auf eine Aufheizung des Gemisches verzichten, sodass das Gemisch zweiphasig durch die Brennerdüse 2 in den Reaktor 1 tritt und die vollständige Vermischung zu einem einphasigen Fluid erst durch den Temperaturanstieg in der Reaktionszone oberhalb der Brennerdüse 2 erfolgt.

Das Methan (oder auch ein anderer gasförmiger Brennstoff) und der Sauerstoff in den Reservoiren 20 bzw. 30 können beispielsweise als kryogene Flüssigkeiten bereitgestellt werden.

Fig.2 stellt eine koaxiale Brennerdüse 2 mit einem Kernstrahl 3 und einer Diffusionsflamme 5 dar. Das Abwasser/Brennstoff-Fluid (Pfeil 15') strömt durch das zentrale Rohr 22, das sauerstoffhaltige Fluid (Pfeil 45') durch das äussere Rohr 23. Das zentrale Rohr 22 kann beispielsweise das äussere Rohr 23 etwas überragen (vgl. Fig.1). Der Mantelstrom 4 ist durch die Pfeile 4' angedeutet. Die verbrennungsähnliche Oxidation findet in der kegelförmigen Flamme 5 statt. Der Transport der Edukte (CH₄, organische Bestandteile von W; O₂) ist durch die Pfeile 32 bzw. 33 angedeutet, der Transport der Produkte P (CO₂, CO u.a.) durch Pfeil 34. Die bei der Reaktion freigesetzte Energie strahlt teilweise einerseits nach aussen ab (Pfeil 50), andererseits in Richtung der Brennerdüse 2 (Pfeil 51). Der zweite Teil dieser Energie (sowie eventuell der Rücktransport von Wärme durch Leitung und Konvektion) erhitzt den ausströmenden Kernstrahl 3 auf eine Temperatur, bei der die Zündung der Reaktion erfolgt. Zwischen Flamme 5 und Kernstrahl 3 sowie zwischen Kernstrahl 3 und Mantelstrom 4 finden Stoffaustauschprozesse statt, die durch Doppelpfeile 35 bzw. 36 angedeutet sind.

Bei einem koaxialen Brenner (Fig.2) treten die beiden Fluidstrahlen parallel aus der Düse 2 aus, wodurch sich eine relativ schlechte Vermischung der Edukte ergibt. Bei einem Kreuzstrahl-Brenner, wie er in Fig.3 illustriert ist, treffen die beiden Strahlen 15'' und 45'' unter einem spitzen Winkel aufeinander. Dabei wird eine grössere Vermischungsintensität erreicht, was zu einer Verkleinerung der Reaktionszone - d.h. zu einer Verkleinerung der Flammenlänge - führt.

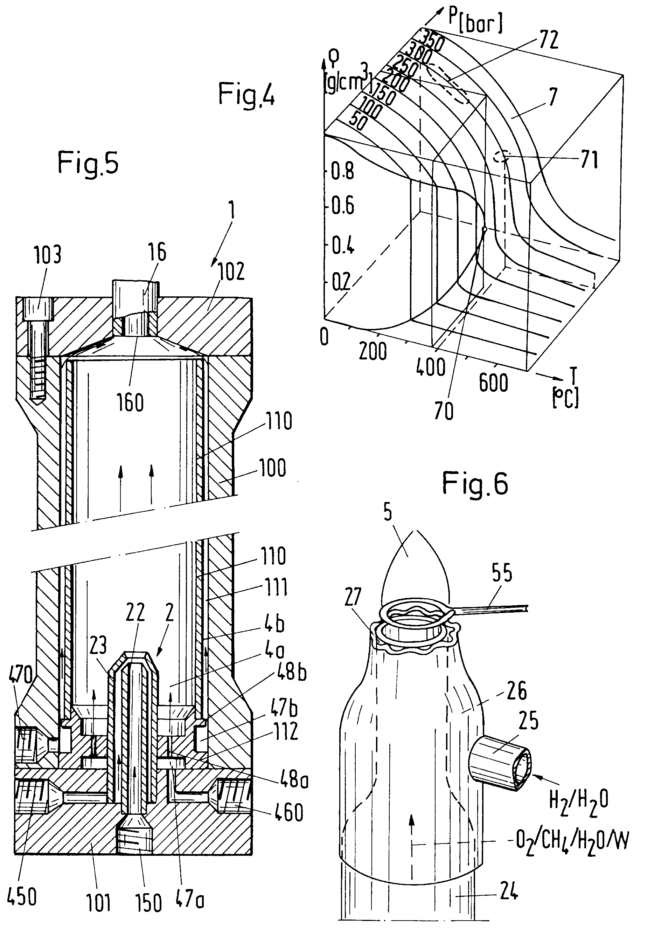

Fig.4 zeigt eine Zustandsfläche 7 von reinem Wasser, deren Punkte die thermodynamischen Gleichgewichtszustände - gegeben durch Temperatur T, Druck p und Dichte - repräsentieren. Der kritische Punkt 70 befindet sich bei T = 374°C und p = 221 bar. Geht man davon aus, dass die Zustandsfläche 7 auch bei der Nassoxidation angenähert für die beiden, die Edukte enthaltenden Fluide gilt, so kann man anhand der Fig.4 das erfindungsgemässe SCWO-Verfahren folgendermassen näher kennzeichnen: Das Verfahren muss bei mindestens rund 250 bar, beispielsweise im Bereich von 300 bar, durchgeführt werden. Damit aus den beiden Fluiden ein zündbares Gemisch entsteht, müssen sich deren superkritischen Zustände beispielsweise in der Zone 71 der Zustandsfläche 7 befinden. Die subkritischen Zustände des Mantelstroms befinden sich entsprechend in einer Zone 72.

Um die Innenseite des Druckgefässes vor Korrosion zu schützen, kann eine Beschichtung vorgesehen werden. Da allerdings erfahrungsgemäss Beschichtungen wegen Rissbildung ihre Schutzwirkung verlieren, ist von dieser Lösung in der Regel abzusehen. Eine andere Lösung ist anhand der in Fig.5 abgebildeten Ausführungsform des erfindungsgemässen Reaktors 1 gezeigt: Es sind zwei Mantelströme 4a und 4b vorgesehen sind, die durch ein Rohr 110 weitgehend getrennt sind.

Der Reaktor 1 der Fig.5 zeigt folgende Komponenten: ein rohrförmiges Wandstück 100, an dessen beiden Enden Deckstücke 101 und 102 mit Schrauben 103 befestigt sind; das Mantelrohr 110, das für den Mantelstrom 4b einen Ringkanal 111 frei lässt und das auf einen Sockel 112 aufgesetzt ist; ferner ein Kreuzstrahl-Brenner, dessen Düse 2 mit dem Innenrohr 22 und dem Aussenrohr 23 rotationssymmetrisch - im Gegensatz zur Düse der Fig.3 - ausgebildet ist. Das Deckstück 101, das die Bodenplatte des Reaktors 1 bildet, weist Anschlussstellen 150 (für das Abwasser/Brennstoff-Fluid), 450 (für das sauerstoffhaltige Fluid) sowie 460 (für Kühlwasser) auf. Eine weitere Anschlussstelle 470 (für Kühlwasser) befindet sich am unteren Ende des Wandstücks 100. Durch den Sockel 112 werden zwei Ringkanäle 47a und 47b gebildet, über die das Kühlwasser für die Mantelströme 4a und 4b (durch die Bohrungen 48a bzw. den Ringspalt 48b) in das Reaktorinnere eingespeist werden. Das Mantelrohr 110 wird mit Vorteil aus Keramik, beispielsweise Aluminiumoxid oder Siliziumkarbid, gefertigt.

Die Initialzündung der nassen Hochdruckflamme kann dadurch erfolgen, dass die die Edukte führenden Fluide vor Eintritt in die Brennerdüse 2 auf eine genügend hohe Temperatur erhitzt werden. Es empfiehlt sich bei der Durchführung des erfindungsgemässen Verfahrens mit dem Reaktor 1 gemäss Fig.5 bis zum Eintritt der Initialzündung lediglich den äusseren Mantelstrom 4b zu betreiben. Dadurch erreicht man rascher die benötigte Temperatur in der Reaktionszone.

Es kann auch eine besondere Zündvorrichtung in Form eines Heizdrahtes oder eines Funkenerzeugers vorgesehen werden. Eine Zündvorrichtung kann gleichzeitig die Funktion eines Flammhalters haben, welcher dafür sorgt, dass die Flamme stationär bleibt und nicht durch die Strömung weggerissen wird.

Fig.6 zeigt eine Brennerdüse 2 für eine Vormischflamme. Die Edukte gelangen bereits gemischt durch das Zuführrohr 24 in die Reaktionszone 5. Mit einer Pilotflamme, die mit einem wasserstoffhaltigen Fluid erzeugt wird (Zuführleitung 25, Verteilkanal 26, Düsenöffnungen 27), lässt sich eine Flammstabilisierung erreichen. Durch eine Pilotflamme kann auch gezündet werden. In Fig.5 ist zusätzlich ein ringförmiger Flammhalter 55 dargestellt.

## Patentansprüche

1. Verfahren zur Reinigung von salzbeladenem Abwasser durch Nassoxidation von organischen Inhaltsstoffen bei superkritischen Bedingungen, bei welchem Verfahren das Abwasser, das vorgewärmt sowie hilfsweise mit einem Brennstoff vermischt ist, zusammen mit einem sauerstoffhaltigen Fluid in einer superkritischen Zone im Mittenbereich eines zylindrischen Reaktors zur Reaktion gebracht wird, wobei die bei der Reaktion ausfallenden Salze in eine subkritische Zone und von dort als Feststoff-Flüssigkeits-Gemisch oder gelöst aus dem Reaktor transportiert werden, dadurch gekennzeichnet, dass die subkritische Zone mittels eines aus Kühlwasser gebildeten Mantelstroms (4) hergestellt wird, von welchem die superkritische Zone (3) umhüllt wird, dass die Reaktion in Form einer Flamme (5) durchgeführt wird und dass die Reaktionsprodukte mit dem Kühlwasser vermischt aus dem Reaktor (1) abgezogen werden.

2. Verfahren nach Anspruch 1, dadurch gekennzeichnet, dass der Brennstoff bei Normalbedingungen gasförmig ist, dass dieser insbesondere im wesentlichen aus Methan besteht.

3. Verfahren nach Anspruch 1 oder 2, dadurch gekennzeichnet, dass das sauerstoffhaltige Fluid ein einphasiges Gemisch von Wasser und Sauerstoff oder Luft ist.

4. Verfahren nach einem der Ansprüche 1 bis 3, dadurch gekennzeichnet, dass die Flamme eine Diffusionsflamme ist.

5. Verfahren nach einem der Ansprüche 1 bis 3, dadurch gekennzeichnet, dass die Flamme eine Vormischflamme ist.

6. Verfahren nach Anspruch 5, dadurch gekennzeichnet, dass mit einem brennstoffhaltigen Fluid eine Pilotflamme erzeugt wird.

7. Verfahren nach einem der Ansprüche 1 bis 6, dadurch gekennzeichnet, dass mit einem rotierenden Mantelstrom eine stabile Schichtung erzeugt wird.

8. Reaktor (1) zum Durchführen des Verfahrens nach einem der Ansprüche 1 bis 7, dadurch gekennzeichnet, dass am einen Ende des als zylindrisches Druckgefäss ausgebildeten Reaktors mindestens eine Brennerdüse (2) und mindestens eine ringförmige, die Brennerdüse umgebende Einspeisestelle (48) für das Kühlwasser vorgesehen sind und dass am anderen Ende mindestens eine gemeinsame Austrittsstelle (160) für Kühlwasser und Reaktionsprodukte angeordnet ist.

9. Reaktor nach Anspruch 8, dadurch gekennzeichnet, dass die Reaktorachse im wesentliche vertikal ausgerichtet ist und dass die Austrittsstelle (160) oben angeordnet ist.

10. Reaktor nach einem der Ansprüche 8 oder 9, dadurch gekennzeichnet, dass über der Brennerdüse (2) eine Flammhaltevorrichtung (55) vorgesehen ist.

11. Reaktor nach einem der Ansprüche 8 bis 10, dadurch gekennzeichnet, dass zwei Mantelströme (4a, 4b) vorgesehen sind, die durch ein Rohr (110) weitgehend getrennt sind.

## Claims

1. A process for the purification of salt-charged waste water by wet oxidation of organic constituents under supercritical conditions, during which process the waste water, which is preheated and also in addition mixed with a fuel, is reacted together with an oxygenous fluid in a supercritical zone in the central region of a cylindrical reactor, whereby the salts precipitating during the reaction are transported into a subcritical zone and from there as a solid-liquid mixture or in the dissolved state from the reactor,
**characterised in that** the subcritical zone is produced by means of a by-pass flow (4) formed from cooling water, by which the supercritical zone (3) is enveloped,
**in that** the reaction is performed in the form of a flame (5),
**and in that** the reaction products are removed from the reactor (1) mixed with the cooling water.

2. A process according to Claim 1,
**characterised in that** under normal conditions the fuel is gaseous,
**and in that** in particular it substantially consists of methane.

3. A process according to Claim 1 or 2,
**characterised in that** the oxygenous fluid is a single-phase mixture of water and oxygen or air.

4. A process according to one of Claims 1 to 3,
**characterised in that** the flame is a diffusion flame.

5. A process according to one of Claims 1 to 3,
**characterised in that** the flame is a premixing flame.

6. A process according to Claim 5,
**characterised in that** a pilot flame is produced with a fuel-containing fluid.

7. A process according to one of Claims 1 to 6,
**characterised in that** a stable lamination is produced with a rotating by-pass flow.

8. A reactor (1) for performing the process according to one of Claims 1 to 7,
**characterised in that** at one end of the reactor constructed as a cylindrical pressure vessel are provided at least one burner nozzle (2) and at least one annular inlet point (48) for the cooling water surrounding the burner nozzle,
**and in that** at the other end is disposed at least one common outlet point (160) for cooling water and reaction products.

9. A reactor according to Claim 8,
**characterised in that** the reactor axis is aligned substantially vertically,
**and in that** the outlet point (160) is disposed at the top.

10. A reactor according to one of Claims 8 or 9,
**characterised in that** a flame holder device (55) is provided over the burner nozzle (2).

11. A reactor according to one of Claims 8 to 10,
**characterised in that** two by-pass flows (4a, 4b) are provided, which are largely separated by a pipe (110).

## Revendications

1. Procédé de purification d'eaux usées par oxydation humide des composants organiques, dans des conditions supercritiques, procédé dans lequel les eaux usées, ayant été préchauffées, ainsi que, à titre auxiliaire, mélangées à un combustible, sont mises en réaction, conjointement avec un fluide contenant de l'oxygène, dans une zone supercritique, dans la zone centrale d'un réacteur cylindrique, les sels se précipitant lors de la réaction étant transportés dans une zone sous-critique et, de là, à titre de mélange solide-liquide ou bien sous forme dissoute, transportés hors du réacteur, caractérisé en ce que la zone sous-critique est constituée au moyen d'un courant enveloppe (4) constitué d'eau de refroidissement, courant à partir duquel la zone supercritique (3) est enveloppée, en ce que la réaction est conduite sous la forme d'une flamme (5) et en ce que les produits de réaction sont extraits du réacteur (1), mélangés à l'eau de refroidissement.

2. Procédé selon la revendication 1, caractérisé en ce que le combustible se présente sous forme gazeuse dans des conditions normales, en ce qu'en particulier il est constitué essentiellement de méthane.

3. Procédé selon la revendication 1 ou 2, caractérisé en ce que le fluide contenant de l'oxygène est un mélange monophasique d'eau et d'oxygène ou d'air.

4. Procédé selon l'une des revendications 1 à 3, caractérisé en ce que la flamme est une flamme de diffusion.

5. Procédé selon l'une des revendications 1 à 3, caractérisé en ce que la flamme est une flamme de prémélange.

6. Procédé selon la revendication 5, caractérisé en ce que une flamme pilote est générée avec un fluide contenant un combustible.

7. Procédé selon l'une des revendications 1 à 6, caractérisé en ce qu'une stratification stable est générée avec un courant enveloppe rotatif.

8. Réacteur (1) pour la mise en oeuvre du procédé selon l'une des revendications 1 à 7, caractérisé en ce que, à une extrémité du réacteur réalisé sous forme de récipient à pression cylindrique, sont prévus au moins une buse de brûleur (2) et au moins un point d'injection (48) à forme annulaire entourant la buse de brûleur, pour l'eau de refroidissement et en ce que, à l'autre extrémité, est disposé au moins un point de sortie (160) commun pour l'eau de refroidissement et les produits de réaction.

9. Réacteur selon la revendication 8, caractérisé en ce que l'axe de réacteur est orienté sensiblement verticalement et en ce que le point de sortie (160) est disposé en partie haute.

10. Réacteur selon l'une des revendications 8 ou 9, caractérisé en ce qu'un dispositif de maintien-accroche-flamme (55) est prévu sur la buse de brûleur (2).

11. Réacteur selon l'une des revendications 8 à 10, caractérisé en ce que deux courants enveloppe (4a, 4b) sont prévus, notablement séparés par un tube (110).
